# EUROPEAN PATENT SPECIFICATION

(11) **EP 4 503 535 B1**
(45) Date of publication and mention of the grant of the patent: **26.08.2026**
(21) Application number: 23810958.1
(22) Date of filing: 19.05.2023
(51) Int. Cl.: H04L 67/1097, H04L 41/0663, H04L 67/02, H04L 67/101, H04L 69/40, H04L 41/082

(54) **SERVICE DISASTER RECOVERY METHOD AND TERMINAL DEVICE**
DIENSTKATASTROPHENWIEDERHERSTELLUNGSVERFAHREN UND ENDGERÄTEVORRICHTUNG
PROCÉDÉ DE REPRISE SUR SINISTRE DE SERVICE ET DISPOSITIF TERMINAL

(30) Priority: 27.05.2022 CN 202210590988
(43) Date of publication of application: 05.02.2025
(73) Proprietor: Huawei Technologies Co., Ltd., Shenzhen, Guangdong 518129 (CN)
(72) Inventor: TANG, Zeping, Shenzhen, Guangdong 518129 (CN)
(74) Representative: Grünecker Patent- und Rechtsanwälte PartG mbB
(86) International application number: PCT/CN2023/095241
(87) International publication number: WO 2023/226887

(56) References cited:
- WO-A1-02/071242
- WO-A1-2016/101763
- CN-A- 106 302 313
- CN-A- 108 200 132
- CN-A- 108 810 111
- CN-A- 112 202 631
- CN-B- 104 283 933
- US-B1- 10 630 771

## Description

### TECHNICAL FIELD

The present disclosure relates to the field of communication technologies, and in particular, to a service disaster tolerance method, a terminal device, a software development kit server, and a communication system.

### BACKGROUND

When a user accesses a service server, the service server can integrate some product functions through a software development kit (software development kit, SDK) technology. When an SDK static resource is provided by a source server, user access speeds in different regions differ greatly, the static resource is usually stored in a content delivery network (content delivery network, CDN) server, to improve the user access speed.

In the conventional technology, a terminal device initiates a request to the service server, the service server returns an address of the static resource on the CDN server to the terminal device, and the terminal device requests the static resource from the CDN server based on the address. CN104283933A relates to a method, a client and a system for downloading data, aiming at effectively improving the success rate of data downloading. CN 106302313A relates to the field of network security technologies, and in particular, to a DDoS defense method based on a scheduling system and a DDoS defense system.

However, the CDN server is maintained by an external service provider. When the CDN server is faulty, a user function is unavailable.

### SUMMARY

Embodiments of the present disclosure disclose a service disaster tolerance method, used for SDK static resource disaster tolerance. The present invention is defined according to the independent claims. The dependent claims recite advantageous embodiments of the invention.

A first aspect of the present disclosure provides a service disaster tolerance method. The method includes: A terminal device sends a first request message to a service server, where the first request message is used to request a resource required for displaying a service page, the resource includes a software development kit SDK static resource, and the SDK static resource is used to implement an SDK function associated with the service page. The terminal device obtains a response message that is of the first request message and that is returned by the service server, where the response message of the first request message includes a first resource address and a second resource address, the first resource address points to the SDK static resource on a content delivery network CDN server, and the second resource address points to the SDK static resource on a source server.

According to the service disaster tolerance method provided in this embodiment of the present disclosure, the terminal device requests SDK static resource information from the service server, and may obtain two resource addresses from the service server, including the address of the SDK static resource on the CDN server and the address of the SDK static resource on the source server. When either the CDN server or the source server is in a normal working state, it can be ensured that the terminal device can obtain the SDK static resource to implement the SDK function associated with the service page. Even if some servers are faulty, for example, the CDN server is faulty, services can still run normally. This improves a service disaster tolerance capability.

In a possible implementation of the first aspect, the second resource address is a standby address.

According to the service disaster tolerance method provided in this embodiment of the present disclosure, the second resource address may be used as a standby address. Because the CDN server may be an edge server deployed in various regions, a user may be enabled to obtain required content nearby, network congestion is reduced, and a user access response speed is improved. Usually, an SDK resource that is on the CDN server and to which the first resource address points is preferentially requested. However, the CDN server is usually maintained by an external service provider. If the CDN server is faulty, an SDK service is unavailable, and there is uncontrollability. Therefore, the second resource address is provided for the terminal device, and points to the SDK static resource on the source server. When the CDN server is faulty, the source server can provide service assurance.

In a possible implementation of the first aspect, the method further includes: The terminal device sends a second request message to the CDN server based on the first resource address, where the second request message is used to request the SDK static resource on the CDN server. The terminal device receives a response message that is of the second request message and that is sent by the CDN server. If the response message of the second request message includes request failure information, the terminal device sends a third request message to the source server based on the second resource address, where the third request message is used to request the SDK static resource on the source server. The terminal device receives a response message that is of the third request message and that is returned by the source server, where the response message of the third request message includes the SDK static resource.

According to the service disaster tolerance method provided in this embodiment of the present disclosure, if the terminal fails to request the SDK static resource from the CDN server based on the first resource address, the terminal may obtain, based on the second resource address, the SDK static resource on the source server. Therefore, the service disaster tolerance capability is strong, and service reliability is improved.

In a possible implementation of the first aspect, the method further includes: The terminal device implements the SDK function based on the SDK static resource, where the SDK function includes: a login verification function or a registration function.

A second aspect of the present disclosure provides a service disaster tolerance method. The method includes: An SDK server receives a fourth request message sent by a service server, where the fourth request message is used to obtain an SDK static resource, and the SDK static resource is used to implement an SDK function associated with a service page. The SDK server returns a response message of the fourth request message to the service server, where the response message of the fourth request message includes a first resource address and a second resource address, the first resource address points to the SDK static resource on a CDN server, and the second resource address points to the SDK static resource on a source server.

According to the service disaster tolerance method provided in this embodiment of the present disclosure, the SDK server may provide addresses of at least two SDK static resources on different servers. When one of the servers is faulty, the other server may provide the SDK static resource. Therefore, a service disaster tolerance capability can be improved.

In a possible implementation of the second aspect, the second resource address is a standby address.

According to the service disaster tolerance method provided in this embodiment of the present disclosure, the second resource address may be used as a standby address. Because the CDN server may be an edge server deployed in various regions, a user can obtain a required resource nearby, network congestion is reduced, and a user access response speed is improved. Usually, an SDK static resource that is on the CDN server and to which the first resource address points is preferentially requested. However, the CDN server is usually maintained by an external service provider. If the CDN server is faulty, an SDK service is unavailable, and there is uncontrollability. Therefore, the second resource address pointing to the SDK static resource on the source server is provided. When the CDN server is faulty, the source server can provide service assurance. The service disaster tolerance capability is provided, and service reliability is improved while a user access response speed is improved.

In a possible implementation of the second aspect, the method further includes: The SDK server updates the first resource address and/or the second resource address.

According to the service disaster tolerance method provided in this embodiment of the present disclosure, when the SDK static resource is updated, for example, in a scenario such as version upgrade, the first resource address and/or the second resource address in the SDK server are updated, so that dynamically updated reliable address information may be returned to the service server.

A third aspect of the present disclosure provides a service disaster tolerance method. The method includes: A service server receives a first request message sent by a terminal device, where the first request message is used to request a resource required for displaying a service page, the resource includes a software development kit SDK static resource, and the SDK static resource is used to implement an SDK function associated with the service page. The service server sends a fourth request message to an SDK server based on the first request message, where the fourth request message is used to obtain the SDK static resource. The service server receives a response message that is of the fourth request message and that is returned by the SDK server, where the response message of the fourth request message includes a first resource address and a second resource address, the first resource address points to the SDK static resource on a CDN server, and the second resource address points to the SDK static resource on a source server. The service server forwards the first resource address and the second resource address to the terminal.

In a possible implementation of the third aspect, the second resource address is a standby address, and is used when the first resource address fails to obtain a resource.

A fourth aspect of the present disclosure provides a terminal device, including:

A sending module is configured to send a first request message to a service server, where the first request message is used to request a resource required for displaying a service page, the resource includes an SDK static resource, and the SDK static resource is used to implement an SDK function associated with the service page.

A receiving module is configured to obtain a response message that is of the first request message and that is returned by the service server, where the response message of the first request message includes a first resource address and a second resource address, the first resource address points to the SDK static resource on a content delivery network CDN server, and the second resource address points to the SDK static resource on a source server.

In a possible implementation of the fourth aspect, the second resource address is a standby address.

In a possible implementation of the fourth aspect, the sending module is further configured to send a second request message to the CDN server based on the first resource address, where the second request message is used to request the SDK static resource on the CDN server. The receiving module is further configured to receive a response message that is of the second request message and that is sent by the CDN server. The sending module is further configured to: if the response message of the second request message includes request failure information, send a third request message to the source server based on the second resource address, where the third request message is used to request the SDK static resource on the source server. The receiving module is further configured to receive a response message that is of the third request message and that is returned by the source server, where the response message of the third request message includes the SDK static resource.

In a possible implementation of the fourth aspect, the terminal device further includes a processing module, configured to implement the SDK function based on the SDK static resource, where the SDK function includes a login verification function.

A fifth aspect of the present disclosure provides an SDK server, including: A receiving module is configured to receive a fourth request message sent by a service server, where the fourth request message is used to obtain an SDK static resource, and the SDK static resource is used to implement an SDK function associated with a service page. A sending module is configured to return a response message of the fourth request message to the service server, where the response message of the fourth request message includes a first resource address and a second resource address, the first resource address points to the SDK static resource on a CDN server, and the second resource address points to the SDK static resource on a source server.

In a possible implementation of the fifth aspect, the second resource address is a standby address.

In a possible implementation of the fifth aspect, the SDK server further includes: An update module is configured to update the first resource address and/or the second resource address.

A sixth aspect of the present disclosure provides a service server, including: A receiving module is configured to receive a first request message sent by a terminal device, where the first request message is used to request a resource required for displaying a service page, the resource includes a software development kit SDK static resource, and the SDK static resource is used to implement an SDK function associated with the service page. A sending module is configured to send a fourth request message to an SDK server based on the first request message, where the fourth request message is used to obtain the SDK static resource. The receiving module is further configured to receive a response message that is of the fourth request message and that is returned by the SDK server, where the response message of the fourth request message includes a first resource address and a second resource address, the first resource address points to the SDK static resource on a CDN server, and the second resource address points to the SDK static resource on a source server. The sending module is further configured to forward the first resource address and the second resource address to the terminal.

In a possible implementation of the sixth aspect, the second resource address is a standby address.

A seventh aspect of the present disclosure provides a terminal device, including: a memory, where the memory stores computer-readable instructions; and a processor connected to the memory, where when the computer-readable instructions are executed by the processor, the terminal device is enabled to implement the method according to any one of the first aspect and the possible implementations.

An eighth aspect of the present disclosure provides an SDK server, including: a memory, where the memory stores a computer-readable instruction; and a processor connected to the memory, where when the computer-readable instructions are executed by the processor, the SDK server is enabled to implement the method according to any one of the second aspect and the possible implementations.

A ninth aspect of the present disclosure provides a service server, including: a memory, where the memory stores computer-readable instructions; and a processor connected to the memory, where when the computer-readable instructions are executed by the processor, the service server is enabled to implement the method according to any one of the third aspect and the possible implementations.

A tenth aspect of the present disclosure provides a computer program product, including computer-readable instructions; and when the computer-readable instructions are run on a computer, the computer is enabled to perform the method according to any one of the first aspect, the second aspect, the third aspect, or the possible implementations.

An eleventh aspect of the present disclosure provides a computer-readable storage medium, where the computer-readable storage medium stores instructions; and when the instructions are run on a computer, the computer is enabled to perform the method according to any one of the first aspect, the second aspect, the third aspect, or the possible implementations.

A twelfth aspect of the present disclosure provides a chip, including a processor. The processor is configured to read and execute a computer program stored in a memory, to perform the method according to any possible implementation of any one of the foregoing aspects. Optionally, the chip includes the memory, and the memory and the processor are connected to each other by using a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result by using the communication interface. The communication interface may be an input/output interface.

A thirteenth aspect of the present disclosure provides a communication system. The communication system includes a terminal device, a service server, and an SDK server. The terminal device is configured to send a first request message to the service server, where the first request message is used to request a resource required for displaying a service page, the resource includes a software development kit SDK static resource, and the SDK static resource is used to implement an SDK function associated with the service page. The service server is configured to send a fourth request message to the SDK server based on the first request message, where the fourth request message is used to request the SDK static resource. The SDK server is configured to return a response message of the fourth request message to the service server based on the fourth request message, where the response message of the fourth request message includes a first resource address and a second resource address, the first resource address points to the SDK static resource on a CDN server, and the second resource address points to the SDK static resource on a source server. The service server is further configured to send a response message of the first request message to the terminal device, where the response message of the first request message includes the first resource address and the second resource address.

In a possible implementation of the thirteenth aspect, the communication system further includes a CDN server and a source server. The terminal device is further configured to send a second request message to the CDN server based on the first resource address, where the second request message is used to request the SDK static resource on the CDN server. The CDN server is configured to return a response message of the second request message based on the second request message. If the response message of the second request message includes request failure information, the terminal device is further configured to send a third request message to the source server based on the second resource address, where the third request message is used to request the SDK static resource on the source server. The source server is configured to return a response message of the third request message to the terminal device based on the third request message, where the response message of the third request message includes the SDK static resource.

In a possible implementation of the thirteenth aspect, the terminal device is further configured to implement the SDK function based on the SDK static resource, where the SDK function includes a login verification function.

For technical effects brought by any one of the implementations in the fourth aspect, the fifth aspect, the sixth aspect, the seventh aspect, the eighth aspect, the ninth aspect, the tenth aspect, the eleventh aspect, the twelfth aspect, and the thirteenth aspect, refer to technical effects brought by corresponding implementations in the first aspect to the third aspect. Details are not described herein again.

According to the service disaster tolerance method provided in the present disclosure, the terminal device may obtain two resource addresses of the SDK static resource, including the address of the SDK static resource on the CDN server and the address of the SDK static resource on the source server. When either the CDN server or the source server is in a normal working state, it can be ensured that the terminal device can obtain the SDK static resource to implement the SDK function associated with the service page. Even if some servers are faulty, for example, the CDN server is faulty, services can still run normally. This improves a service disaster tolerance capability.

### BRIEF DESCRIPTION OF DRAWINGS

FIG. 1 is a diagram of a system architecture of a service disaster tolerance method according to an embodiment of the present disclosure;
FIG. 2 is a diagram of an embodiment of a service disaster tolerance method according to an embodiment of the present disclosure;
FIG. 3 is a diagram of an embodiment of interaction between a service server and an SDK server according to an embodiment of the present disclosure;
FIG. 4 is a diagram of an embodiment of interaction between modules in a terminal device according to an embodiment of the present disclosure;
FIG. 5 is a diagram of another embodiment of a service disaster tolerance method according to an embodiment of the present disclosure;
FIG. 6 is a diagram of code of information returned by a service server to a terminal device according to an embodiment of the present disclosure;
FIG. 7 is a diagram of code for a terminal device to switch and load an SDK static resource address of a source server according to an embodiment of the present disclosure;
FIG. 8 is an effect diagram of an e-commerce login interface according to an embodiment of the present disclosure;
FIG. 9 is a diagram of an embodiment of a terminal device according to an embodiment of the present disclosure;
FIG. 10 is a diagram of an embodiment of an SDK server according to an embodiment of the present disclosure;
FIG. 11 is a diagram of another embodiment of a terminal device according to an embodiment of the present disclosure; and
FIG. 12 is a diagram of another embodiment of an SDK server according to an embodiment of the present disclosure.

### DESCRIPTION OF EMBODIMENTS

Embodiments of the present disclosure disclose a service disaster tolerance method, used for SDK static resource disaster tolerance. This can improve service reliability.

The following describes embodiments of the present disclosure with reference to accompanying drawings. It is clear that the described embodiments are merely some rather than all of embodiments of the present disclosure. A person of ordinary skill in the art may learn that, with technology development and emergence of a new scenario, the technical solutions provided in embodiments of the present disclosure are also applicable to a similar technical problem.

In the specification, claims, and the accompanying drawings of the present disclosure, terms "first", "second", and the like are intended to distinguish similar objects but do not necessarily indicate a specific order or sequence. It should be understood that the data termed in such a way are interchangeable in proper circumstances, so that embodiments described herein can be implemented in other orders than the order illustrated or described herein. In addition, terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in the present disclosure do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

For ease of understanding, the following briefly describes some technical terms in embodiments of the present disclosure.

### 1. Software development kit (software development kit, SDK)

A software development kit is usually a collection of development tools used by software engineers to establish application software for a specific software package, a specific software framework, a specific hardware platform, and a specific operating system. In a broad sense, a software development tool refers to a collection of related documents, examples, and tools that assist in development of a specific type of software.

The software development kit is the collection of development tools used by the software engineers to create the application software for the specific software package, the specific software framework, the specific hardware platform, and the specific operating system. The SDK is usually an SDK used to develop applications on the Windows platform. The SDK can simply provide some files of an application programming interface API for a programming language, but may also include complex hardware that can communicate with an embedded system. Common tools include utilities for debugging and other purposes. The SDK also usually includes example code, supporting technical notes, or other supporting documents that clarify doubts for primary reference material.

### 2. JS-SDK (JavaScript software development kit, JavaScript SDK) JS software development kit

JavaScript ("JS" for short) is a lightweight, interpretative, or just-in-time compiled programming language with a function priority. The JS-SDK is an optional implementation of an SDK static resource in this embodiment of the present disclosure.

### 3. Content delivery network (content delivery network, CDN)

The CDN is an intelligent virtual network constructed based on an existing network. Based on edge servers deployed in various regions, a user can be enabled to obtain required content nearby through functional modules of a central platform such as load balancing, content distribution, and scheduling. This reduces network congestion, and improves a user access response speed and a hit rate. Key technologies of the CDN mainly include content storage and a distribution technology.

### 4. Disaster tolerance (disaster tolerance)

A disaster tolerance system includes two or more systems that have the same functions and that are in different places away from each other are established. The two systems may perform health status monitoring and function switching with each other. When one system at one location stops working due to an accident (such as a fire, an earthquake, or a fault), one system at another location may be switched to, so that functions of the system can continue to work normally. A disaster tolerance technology is a part of a high availability technology of the system, and provides a node-level system recovery function.

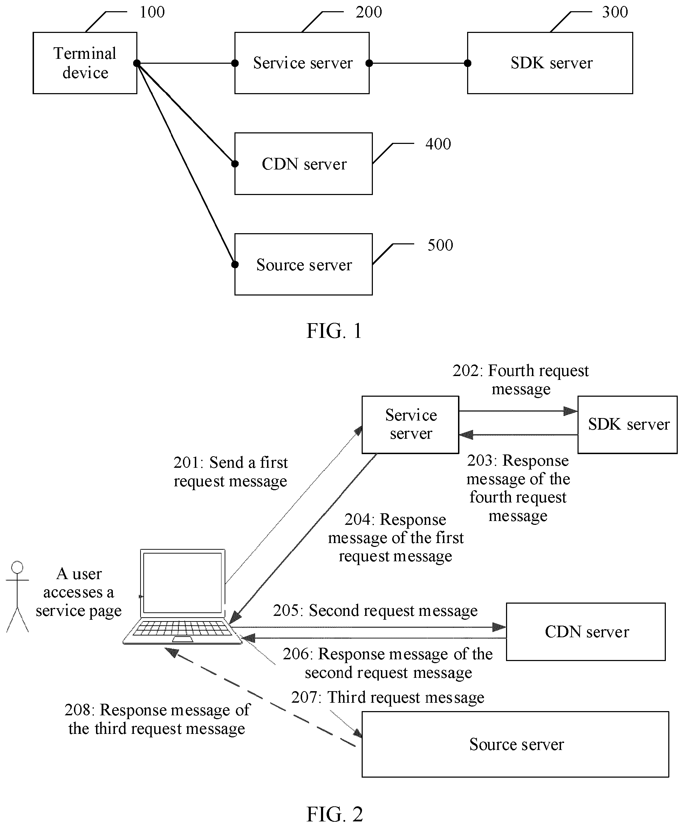

The following describes an architecture of an application scenario of a service disaster tolerance method in embodiments of the present disclosure. With reference to FIG. 1, the architecture of the application scenario includes a terminal device 100, a service server 200, an SDK server 300, a CDN server 400, and a source server 500.

The terminal device 100 communicates with the service server 200 through a network connection. The service server 200 communicates with the SDK server 300 through a network connection. The terminal device 100 communicates with the CDN server 400 through a network connection, and communicates with the source server 500 through a network connection. It should be noted that, as an edge server deployed in various regions, the CDN server 400 is configured to enable a user to obtain required content nearby, and is usually close to a physical location of the terminal device 100. However, the source server 500 may be close to or far from the physical location of the terminal device 100. In other words, access speeds from different terminal devices 100 to the source server 500 differ greatly.

The user accesses a service interface by using a browser of the terminal device 100. A resource required for displaying the service interface by the browser may be obtained by requesting the service server 200. It should be noted that some product functions, for example, functions such as login verification or registration information, are integrated in a JS-SDK manner, and the terminal device 100 needs to obtain an SDK static resource to implement these service functions.

In the past, the SDK static resource is stored on the source server 500. Because user access speeds differ greatly, user experience is greatly affected. Therefore, the SDK static resource may be stored on the CDN server 400 by purchasing a CDN service. However, the CDN server is maintained by an external service provider. Once a fault occurs, a user function is unavailable.

In view of this, embodiments of the present disclosure provide a service disaster tolerance method and a network device, used for SDK static resource disaster tolerance. This can improve service reliability.

With reference to FIG. 2, an embodiment of the present disclosure provides a service disaster tolerance method. The method may be applied to the scenario shown in FIG. 1. In the application scenario shown in FIG. 1, a user terminal is equivalent to the terminal device shown in FIG. 1, and the method includes steps 201 to 208.

201: A terminal device sends a first request message to a service server.

A user accesses a service page through a browser of the terminal device. After obtaining an address accessed by the user, the browser may send the first request message to the service server. The first request message is used to request a resource required for displaying the service page, the resource includes a software development kit SDK static resource, and the SDK static resource is used to implement an SDK function associated with the service page.

In a possible implementation, a second resource address is a standby address. It may be understood that the standby address may be used when a first resource address fails to obtain the resource.

202: The service server sends a fourth request message to an SDK server.

The SDK server receives the fourth request message sent by the service server, where the fourth request message is used to obtain the SDK static resource, and the SDK static resource is used to implement the SDK function associated with the service page.

203: The SDK server returns a response message of the fourth request message to the service server.

The SDK server returns the response message of the fourth request message to the service server. The response message of the fourth request message includes the first resource address and the second resource address, the first resource address points to the SDK static resource on a CDN server, and the second resource address points to the SDK static resource on a source server.

To be specific, the SDK server not only provides the SDK static resource on the CDN server, but also provides an address of the SDK static resource that is on the source server and that is used for switching after the CDN server is faulty.

In a possible implementation, the SDK server updates the first resource address and/or the second resource address.

204: The service server returns a response message of the first request message to the terminal device.

The terminal device obtains the response message that is of the first request message and that is returned by the service server. The response message of the first request message includes the first resource address and the second resource address, the first resource address points to the SDK static resource on the content delivery network CDN server, and the second resource address points to the SDK static resource on the source server.

In a possible implementation, before performing step 205, the terminal device may first check whether the CDN network is normal. For a check manner, refer to an existing method. This is not limited herein. If a check result is normal, a second request message is sent to the CDN server; or if a check result is abnormal, step 207 and step 208 are performed.

205: The terminal device sends the second request message to the CDN server.

The terminal device sends the second request message to the CDN server based on the first resource address. The second request message is used to request the SDK static resource on the CDN server.

206: The CDN server returns a response message of the second request message to the terminal device.

The terminal device receives the response message that is of the second request message and that is sent by the CDN server.

207: The terminal device sends a third request message to the source server.

If the response message of the second request message includes request failure information, the terminal device sends the third request message to the source server based on the second resource address. The third request message is used to request the SDK static resource on the source server.

208: The source server returns a response message of the third request message to the terminal device.

The terminal device receives the response message that is of the third request message and that is returned by the source server. The response message of the third request message includes the SDK static resource.

According to the service disaster tolerance method provided in this embodiment of the present disclosure, the terminal device requests SDK static resource information from the service server, and may obtain two resource addresses from the service server, including an address of the SDK static resource on the CDN server and an address of the SDK static resource on the source server. When either the CDN server or the source server is in a normal working state, it can be ensured that the terminal device can obtain the SDK static resource to implement the SDK function associated with the service page. Even if some servers are faulty, for example, the CDN server is faulty, services can still run normally. This improves a service disaster tolerance capability.

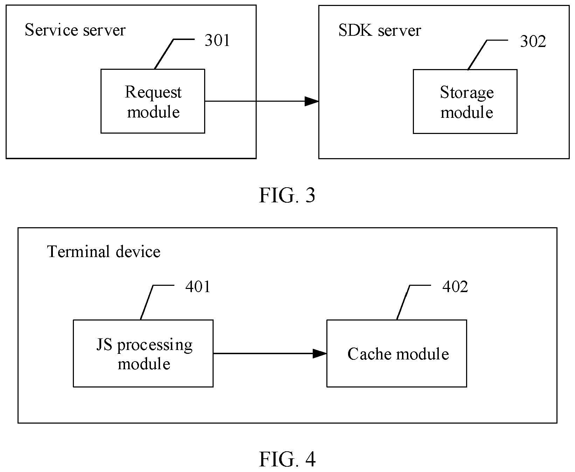

With reference to FIG. 3 and FIG. 4, modules related to the method in a terminal device, a service server, and an SDK server in embodiments of the present disclosure are briefly described. As shown in FIG. 3, based on the foregoing embodiment, it can be learned that, the service server requests an SDK static resource from the SDK server through a request module 301, and the SDK server configures a storage module 302. The storage module 302 may store address information of the SDK static resource. The SDK server reads a first resource address and a second resource address from the storage module 302, where the first resource address points to the SDK static resource on a content delivery network CDN server, and the second resource address points to the SDK static resource on the source server and source site configuration address information, and returns the first resource address and the second resource address to the service server.

As shown in FIG. 4, in a possible implementation, the terminal device includes a JS processing module 401 and a cache module 402. The JS processing module 401 is configured to process an exception of the CDN server. If an exception is detected, the JS processing module 401 stores an identifier to the cache module 402. When an SDK static resource in a same session is subsequently loaded, the cache module may be first checked to determine whether the identifier exists, and if the identifier exists, the SDK static resource is directly requested from the source server.

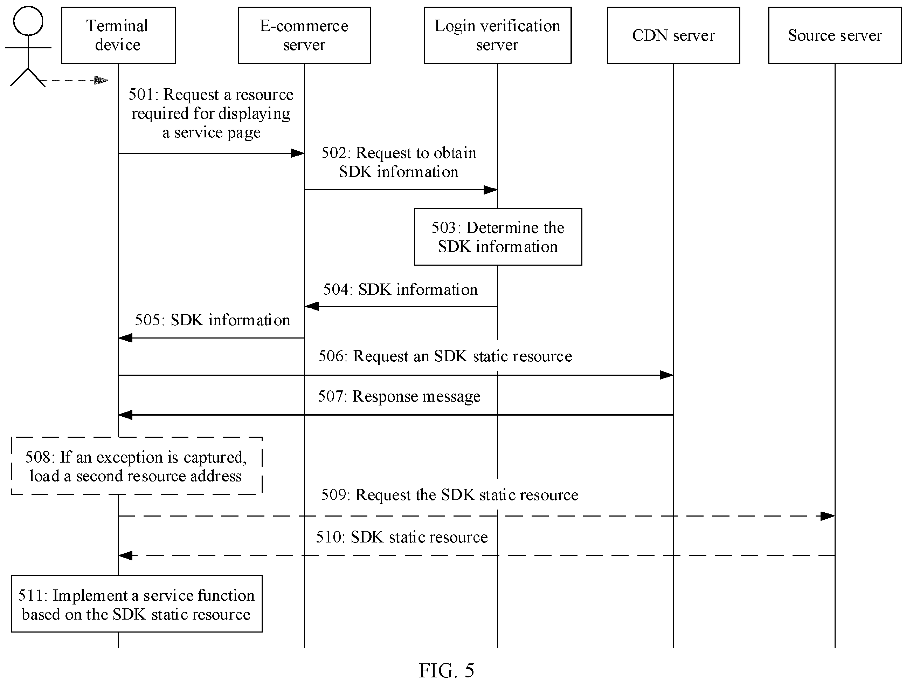

For ease of understanding, the following uses an example for illustration. Specifically, with reference to FIG. 5, an embodiment of the present disclosure provides a service disaster tolerance method. The method may be applied to the scenario shown in FIG. 1. In the application scenario shown in FIG. 1, a user terminal is equivalent to the terminal device 100 shown in FIG. 1, an e-commerce server is equivalent to the service server 200 shown in FIG. 1, and a login verification server is equivalent to the SDK server shown in FIG. 1. The method includes steps 501 to 511.

501: A terminal device requests, from the e-commerce server, a resource required for displaying a service page.

The terminal device requests, from the e-commerce server, the resource required for displaying the service page. For example, the terminal device is a personal computer, and obtains a request of a user for browsing an e-commerce website on a browser. If the user is ready to shop on the e-commerce website, the user needs to first log in to the website, and access a shopping login interface https://www.shop.com/index.html of the e-commerce. After obtaining an access address by using the browser, the terminal device parses an e-commerce server based on a domain name www.shop.com, and queries content that needs to be displayed on the login interface of the e-commerce server.

502: The e-commerce server requests to obtain SDK information from the login verification server.

After receiving an interface request from the browser, the e-commerce server arranges content displayed on the page such as an interface title and a background image. In addition, some SDK functions, for example, functions such as user login, verification, or registration, are entrusted to the login verification server for implementation. The e-commerce server needs to request to obtain the SDK information from the login verification server. The SDK information is an address of an SDK static resource (for example, the SDK static resource in embodiments of the present disclosure is specifically a JS-SDK static resource).

503: The login verification server determines the SDK information.

After receiving the request from the e-commerce server, the login verification server determines a JS-SDK static resource address, that is, obtains URL address information of loginJSSDK.js.

The JS-SDK static resource is stored in two static resource services, and has two URL addresses:
a. An SDK static resource address (namely, a first resource address) that is placed on a purchased CDN service and that is on the CDN server is https://www.cdn.com/loginJSSDK.j s; and
b. An SDK static resource address (namely, a second resource address) on a source server of an Nginx static resource set up on an account platform is https://www.account.com/loginJSSDK.j s.

504: The login verification server returns the SDK information to the e-commerce server.

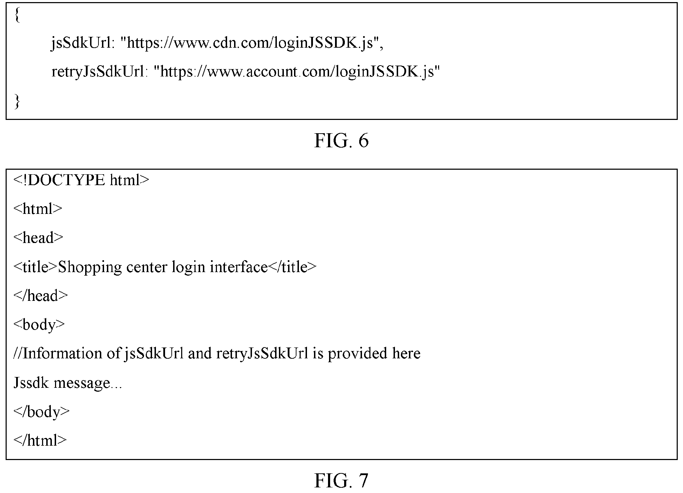

The login verification server returns the SDK information to the e-commerce server. For example, refer to JS-SDK information in FIG. 6. The JS-SDK information includes the first resource address and the second resource address. When returning a page to the terminal device, the e-commerce server also returns JS-SDK static resource address information to the browser of the terminal device. The browser can perform downloading based on the JS-SDK static resource address. After downloading is performed, an account login interface box can be rendered. The JS-SDK static resource implements the functions of the SDK (software development kit), and is referred to as JS-SDK. To obtain URL address information of loginJSSDK.js, the e-commerce server requests the login verification server to obtain latest JS-SDK information of a login-available function.

505: The e-commerce server returns the SDK information to the terminal device.

The e-commerce server returns, to the terminal device, the resource required for displaying the service page. The resource includes a title, a background image, and JS URL information in an HTML format used for login verification. Refer to information returned by the e-commerce server to the terminal device in FIG. 6.

506: The terminal device requests the SDK static resource from the CDN server.

The browser of the terminal device parses the information returned by the e-commerce server, initializes a login verification JS-SDK function, and loads the JS static resource jsSdkUrl used for login verification. The browser requests to download the SDK static resource https://www.cdn.com/loginJSSDKjs from the CDN server, and sends a request to a domain name www.cdn.com to download the JS-SDK static resource.

507: The CDN server returns a response message to the terminal device.

If the response message returned in step 507 includes information indicating that the SDK static resource fails to be requested, the terminal device loads the second resource address, that is, triggers steps 508 to 511. If downloading of https://www.cdn.com/loginJSSDK.js is abnormal, error code 404 is returned in step 507, and the browser receives a 404 error.

If the response message returned in step 507 includes the SDK static resource, step 511 is directly performed.

508: If an exception is captured, load the second resource address.

The terminal device loads https://www.account.com/loginJSSDK.js based on the error code 404. Refer to example code shown in FIG. 7.

509: The terminal device requests the SDK static resource from the source server.

The terminal device requests to download the JS-SDK static resource from the source server.

510: The source server returns the SDK static resource to the terminal device.

511: The terminal device implements a service function based on the SDK static resource.

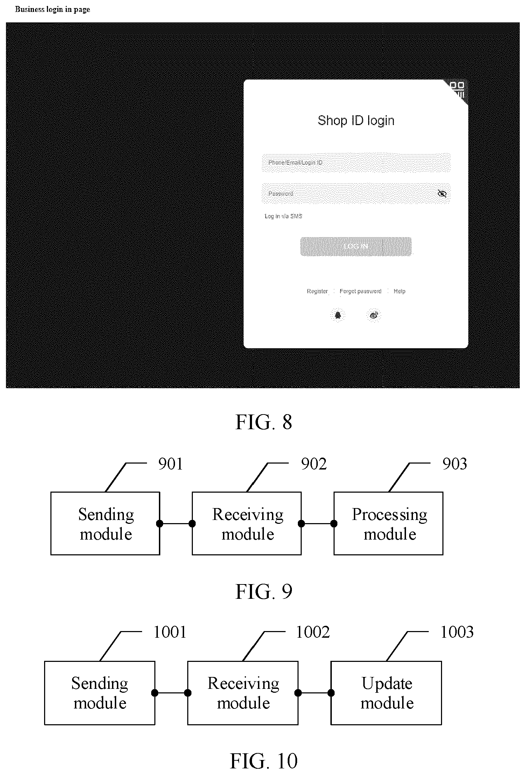

The browser obtains loginJSSDK.js returned by the source server, and executes loginJSSDK.js. A JS processing module dynamically loads other JS files or CSS files on which the login verification function depends. Finally, a service interface https://www.shop.com/index.html shows an effect diagram of an e-commerce login interface shown in FIG. 8. An account and password input box in the white area is a login box rendered after the JS-SDK static resource is loaded. Other parts are a title and a background image returned by the e-commerce.

The foregoing describes the service disaster tolerance method provided in the present disclosure. The following describes a terminal device that implements the service disaster tolerance method. FIG. 9 is a diagram of an embodiment of a terminal device according to an embodiment of the present disclosure.

The present disclosure provides a terminal device, including:
A sending module 901 is configured to send a first request message to a service server, where the first request message is used to request a resource required for displaying a service page, the resource includes a software development kit SDK static resource, and the SDK static resource is used to implement an SDK function associated with the service page.

A receiving module 902 is configured to obtain a response message that is of the first request message and that is returned by the service server, where the response message of the first request message includes a first resource address and a second resource address, the first resource address points to the SDK static resource on a content delivery network CDN server, and the second resource address points to the SDK static resource on a source server.

In a possible implementation, the second resource address is a standby address.

In a possible implementation, the sending module 901 is further configured to send a second request message to the CDN server based on the first resource address, where the second request message is used to request the SDK static resource on the CDN server. The receiving module 902 is further configured to receive a response message that is of the second request message and that is sent by the CDN server. The sending module 901 is further configured to: if the response message of the second request message includes request failure information, send a third request message to the source server based on the second resource address, where the third request message is used to request the SDK static resource on the source server. The receiving module 902 is further configured to receive a response message that is of the third request message and that is returned by the source server, where the response message of the third request message includes the SDK static resource.

In a possible implementation, the terminal device further includes a processing module 903, configured to implement the SDK function based on the SDK static resource, where the SDK function includes a login verification function.

It should be understood that division into the units of the terminal device is merely logical function division, and during actual implementation, may be fully or partially integrated into one physical entity, or may be physically separated. In addition, these units may all be implemented in a form of software invoked by using a processing element; or may all be implemented in a form of hardware; or some units may be implemented in a form of software invoked by using a processing element, and some units are implemented in a form of hardware.

For example, the foregoing units may be one or more integrated circuits configured to implement the foregoing method, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing units is implemented in a form of processing element scheduling a program, the processing element may be a general-purpose processor, for example, a central processing unit (central processing unit, CPU) or another processor that can invoke a program. For still another example, the units may be integrated and implemented in a form of system-on-a-chip (system-on-a-chip, SOC).

The foregoing describes the service disaster tolerance method provided in the present disclosure. The following describes an SDK server that implements the service disaster tolerance method. FIG. 10 is a diagram of an embodiment of an SDK server according to an embodiment of the present disclosure.

An embodiment of the present disclosure provides an SDK server, including: A receiving module 1002 is configured to receive a fourth request message sent by a service server, where the fourth request message is used to obtain an SDK static resource, and the SDK static resource is used to implement an SDK function associated with a service page. A sending module 1001 is configured to return a response message of the fourth request message to the service server, where the response message of the fourth request message includes a first resource address and a second resource address, the first resource address points to the SDK static resource on a CDN server, and the second resource address points to the SDK static resource on a source server.

In a possible implementation, the second resource address is a standby address.

In a possible implementation, the SDK server further includes: An update module 1003 is configured to update the first resource address and/or the second resource address.

It should be understood that division into the units of the SDK server is merely logical function division, and during actual implementation, may be fully or partially integrated into one physical entity, or may be physically separated. In addition, these units may all be implemented in a form of software invoked by using a processing element; or may all be implemented in a form of hardware; or some units may be implemented in a form of software invoked by using a processing element, and some units are implemented in a form of hardware.

For example, the foregoing units may be one or more integrated circuits configured to implement the foregoing method, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing units is implemented in a form of processing element scheduling a program, the processing element may be a general-purpose processor, for example, a central processing unit (central processing unit, CPU) or another processor that can invoke a program. For still another example, the units may be integrated and implemented in a form of system-on-a-chip (system-on-a-chip, SOC).

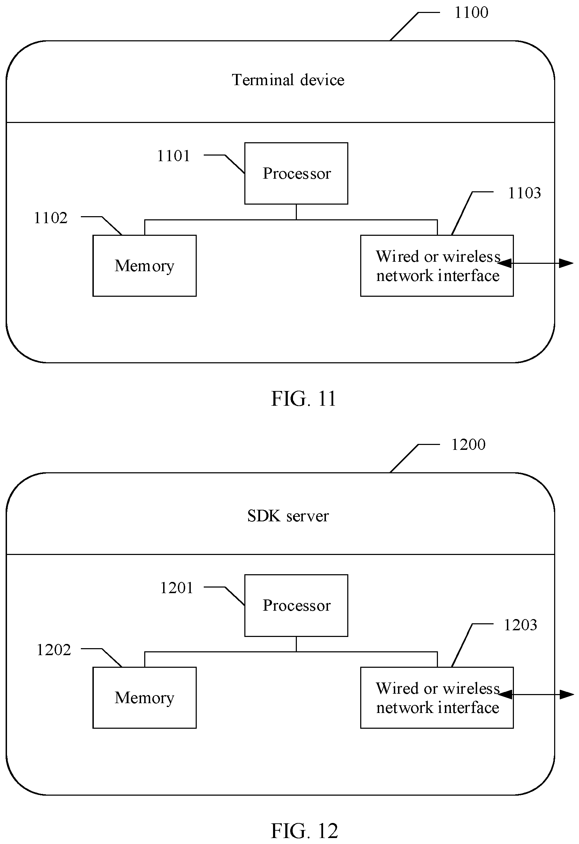

FIG. 11 is a diagram of another embodiment of a terminal device according to an embodiment of the present disclosure.

The terminal device provided in this embodiment may be an electronic device such as a mobile phone, a notebook computer, a desktop computer, a tablet computer, or a wearable device. A specific device form of the terminal device is not limited in this embodiment of the present disclosure.

The terminal device 1100 may vary greatly due to different configurations or performance, and may include one or more processors 1101 and a memory 1102. The memory 1102 stores a program or data.

The memory 1102 may be a volatile memory or a non-volatile memory. Optionally, the processor 1101 is one or more central processing units (central processing units, CPUs), and the CPU may be a single-core CPU, or may be a multi-core CPU. The processor 1101 may communicate with the memory 1102, and execute, on the terminal device 1100, a series of instructions in the memory 1102.

The terminal device 1100 further includes one or more wired or wireless network interfaces 1103, for example, an Ethernet interface.

Optionally, although not shown in FIG. 11, the terminal device 1100 may further include one or more power supplies and one or more input/output interfaces. The input/output interface may be configured to be connected to a display, a mouse, a keyboard, a touchscreen device, a sensor device, or the like. The input/output interface is an optional component, and may or may not exist. This is not limited herein.

For a procedure performed by the processor 1101 in the terminal device 1100 in this embodiment, refer to the method procedure described in the foregoing method embodiments. Details are not described herein again.

FIG. 12 is a diagram of another embodiment of an SDK server according to an embodiment of the present disclosure.

The SDK server provided in this embodiment may be a virtual machine, a physical server, or the like. A specific device form of the SDK server is not limited in this embodiment of the present disclosure.

The SDK server 1200 may vary greatly due to different configurations or performance, and may include one or more processors 1201 and a memory 1202. The memory 1202 stores a program or data.

The memory 1202 may be a volatile memory or a non-volatile memory. Optionally, the processor 1201 is one or more central processing units (central processing units, CPUs), and the CPU may be a single-core CPU, or may be a multi-core CPU. The processor 1201 may communicate with the memory 1202, and execute, on the SDK server 1200, a series of instructions in the memory 1202.

The SDK server 1200 further includes one or more wired or wireless network interfaces 1203, for example, an Ethernet interface.

Optionally, although not shown in FIG. 12, the SDK server 1200 may further include one or more power supplies and one or more input/output interfaces. The input/output interface may be configured to be connected to a display, a mouse, a keyboard, a touchscreen device, a sensor device, or the like. The input/output interface is an optional component, and may or may not exist. This is not limited herein.

For a procedure performed by the processor 1201 in the SDK server 1200 in this embodiment, refer to the method procedure described in the foregoing method embodiments. Details are not described herein.

It may be clearly understood by a person skilled in the art that, for ease and brevity of description, for a detailed working process of the foregoing system, apparatus, and units, refer to a corresponding process in the foregoing method embodiments. Details are not described herein again.

In the several embodiments provided in the present disclosure, it should be understood that the disclosed system, apparatus, and methods may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part of or all the units may be selected based on an actual requirement to implement objectives of the solutions in this embodiment.

In addition, functional units in embodiments of the present disclosure may be integrated into one processing unit. Each of the units may alternatively exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of the present disclosure essentially, or a part contributing to the conventional technology, or all or a part of the technical solutions may be implemented in a form of software product. The computer software product is stored in a storage medium and includes several instructions for enabling a computer device (which may be a personal computer, a server, a network device, or the like) to perform all or some of the steps of the methods in embodiments of the present disclosure. The foregoing storage medium includes any medium that can store program code, for example, a USB flash drive, a removable hard disk, a read-only memory (read-only memory, ROM), a random access memory (random access memory, RAM), a floppy disk, or a compact disc.

In conclusion, the foregoing embodiments are merely intended for describing the technical solutions of the present disclosure, but not for limiting the present disclosure. Although the present disclosure is described in detail with reference to the foregoing embodiments, a person of ordinary skill in the art should understand that modifications may still be made to the technical solutions described in the foregoing embodiments
without departing from the scope of the technical solutions of embodiments of the present disclosure. The invention is defined by the appended claims.

## Claims

1. A service disaster tolerance method, comprising:
sending (201), by a terminal device (100), a first request message to a service server (200), wherein the first request message is used to request a resource required for displaying a service page, the resource comprises a software development kit, SDK, static resource, wherein the SDK static resource is implemented as a JavaScript software development kit, JS-SDK, and the SDK static resource is used to implement an SDK function associated with the service page; and
obtaining (204), by the terminal device (100), a response message that is of the first request message and that is returned by the service server (200), wherein the response message of the first request message comprises a first resource address and a second resource address, the first resource address points to the SDK static resource on a content delivery network, CDN, server, and the second resource address points to the SDK static resource on a source server (500);
sending (205), by the terminal device (100), a second request message to the CDN server (400) based on the first resource address, wherein the second request message is used to request the SDK static resource on the CDN server (400);
receiving (206), by the terminal device (100), a response message that is of the second request message and that is sent by the CDN server (400);
if the response message of the second request message comprises request failure information, sending (207), by the terminal device (100), a third request message to the source server (500) based on the second resource address, wherein the third request message is used to request the SDK static resource on the source server (500); and
receiving (208), by the terminal device (100), a response message that is of the third request message and that is returned by the source server (500), wherein the response message of the third request message comprises the SDK static resource.

2. The method according to claim 1, wherein the second resource address is a standby address.

3. A terminal device (100), comprising:
a sending module (901), configured to send a first request message to a service server (200), wherein the first request message is used to request a resource required for displaying a service page, the resource comprises a software development kit, SDK, static resource, wherein the SDK static resource is implemented as a JavaScript software development kit, JS-SDK, and the SDK static resource is used to implement an SDK function associated with the service page; and
a receiving module (902), configured to obtain a response message that is of the first request message and that is returned by the service server (200), wherein the response message of the first request message comprises a first resource address and a second resource address, the first resource address points to the SDK static resource on a content delivery network, CDN, server (400), and the second resource address points to the SDK static resource on a source server (500);
the sending module (901) is further configured to send a second request message to the CDN server (400) based on the first resource address, wherein the second request message is used to request the SDK static resource on the CDN server (400);
the receiving module (902) is further configured to receive a response message that is of the second request message and that is sent by the CDN server (400);
the sending module (901) is further configured to: if the response message of the second request message comprises request failure information, send a third request message to the source server (500) based on the second resource address, wherein the third request message is used to request the SDK static resource on the source server (500); and
the receiving module (902) is further configured to receive a response message that is of the third request message and that is returned by the source server (500), wherein the response message of the third request message comprises the SDK static resource.

4. The terminal device (100) according to claim 3, wherein the second resource address is a standby address.

5. A terminal device (100), comprising:
a memory (1102), wherein the memory stores computer-readable instructions; and
a processor (1101) connected to the memory, wherein when the computer-readable instructions are executed by the processor (1101), the terminal device (100) is enabled to implement the method according to any one of claims 1 to 2.

6. A computer program product, comprising computer-readable instructions, wherein when the computer-readable instructions are run on a computer, the computer is enabled to perform the method according to any one of claims 1 to 2.

7. A computer-readable storage medium, wherein the computer-readable storage medium stores instructions; and when the instructions are run on a computer, the computer is enabled to perform the method according to any one of claims 1 to 2.

8. A communication system, wherein the communication system comprises a terminal device (100) according to claim 5,
a service server (200), and a software development kit, SDK, server (300); wherein
the service server (200) is configured to send a fourth request message to the SDK server (300) based on the first request message, wherein the fourth request message is used to obtain the SDK static resource;
the SDK server (300) is configured to return a response message of the fourth request message to the service server (200) based on the fourth request message, wherein the response message of the fourth request message comprises a first resource address and a second resource address, the first resource address points to the SDK static resource on a content delivery network, CDN, server (400), and the second resource address points to the SDK static resource on a source server (500); and
the service server (200) is further configured to send the first resource address and the second resource address to the terminal device (100).

## Patentansprüche

1. Dienstkatastrophentoleranzverfahren, umfassend:
Senden (201), durch eine Endgerätevorrichtung (100), einer ersten Anforderungsnachricht an einen Dienstserver (200), wobei die erste Anforderungsnachricht verwendet wird, um eine Ressource anzufordern, die zum Anzeigen einer Dienstseite erforderlich ist, die Ressource eine statische Software-Development-Kit-Ressource (statische SDK-Ressource) umfasst, wobei die statische SDK-Ressource als ein JavaScript-Software-Development-Kit (JS-SDK) implementiert ist und die statische SDK-Ressource verwendet wird, um eine mit der Dienstseite verknüpfte SDK-Funktion zu implementieren; und
Erhalten (204), durch die Endgerätevorrichtung (100), einer Antwortnachricht, die zu der ersten Anforderungsnachricht gehört und die durch den Dienstserver (200) zurückgegeben wird, wobei die Antwortnachricht der ersten Anforderungsnachricht eine erste Ressourcenadresse und eine zweite Ressourcenadresse umfasst, die erste Ressourcenadresse auf die statische SDK-Ressource auf einem Content-Delivery-Network-Server (CDN-Server) zeigt, und die zweite Ressourcenadresse auf die statische SDK-Ressource auf einem Quellserver (500) zeigt;
Senden (205), durch die Endgerätevorrichtung (100), einer zweiten Anforderungsnachricht an den CDN-Server (400) basierend auf der ersten Ressourcenadresse, wobei die zweite Anforderungsnachricht verwendet wird, um die statische SDK-Ressource auf dem CDN-Server (400) anzufordern;
Empfangen (206), durch die Endgerätevorrichtung (100), einer Antwortnachricht, die zu der zweiten Anforderungsnachricht gehört und die durch den CDN-Server (400) gesendet wird;
falls die Antwortnachricht der zweiten Anforderungsnachricht Anforderungsfehlschlaginformationen umfasst, Senden (207), durch die Endgerätevorrichtung (100), einer dritten Anforderungsnachricht an den Quellserver (500) basierend auf der zweiten Ressourcenadresse, wobei die dritte Anforderungsnachricht verwendet wird, um die statische SDK-Ressource auf dem Quellserver (500) anzufordern; und
Empfangen (208), durch die Endgerätevorrichtung (100), einer Antwortnachricht, die zu der dritten Anforderungsnachricht gehört und die durch den Quellserver (500) zurückgegeben wird, wobei die Antwortnachricht der dritten Anforderungsnachricht die statische SDK-Ressource umfasst.

2. Verfahren nach Anspruch 1, wobei die zweite Ressourcenadresse eine Standby-Adresse ist.

3. Endgerätevorrichtung (100), umfassend:
ein Sendemodul (901), das dazu konfiguriert ist, um eine erste Anforderungsnachricht an einen Dienstserver (200) zu senden, wobei die erste Anforderungsnachricht verwendet wird, um eine Ressource anzufordern, die zum Anzeigen einer Dienstseite erforderlich ist, die Ressource eine statische Software-Development-Kit-Ressource (statische SDK-Ressource) umfasst, wobei die statische SDK-Ressource als ein JavaScript-Software-Development-Kit (JS-SDK) implementiert ist und die statische SDK-Ressource verwendet wird, um eine mit der Dienstseite verknüpfte SDK-Funktion zu implementieren; und
ein Empfangsmodul (902), das dazu konfiguriert ist, um eine Antwortnachricht zu erhalten, die zu der ersten Anforderungsnachricht gehört und die durch den Dienstserver (200) zurückgegeben wird, wobei die Antwortnachricht der ersten Anforderungsnachricht eine erste Ressourcenadresse und eine zweite Ressourcenadresse umfasst, die erste Ressourcenadresse auf die statische SDK-Ressource auf einem Content-Delivery-Network-Server (CDN-Server) (400) zeigt und die zweite Ressourcenadresse auf die statische SDK-Ressource auf einem Quellserver (500) zeigt;
wobei das Sendemodul (901) ferner dazu konfiguriert ist, um eine zweite Anforderungsnachricht an den CDN-Server (400) basierend auf der ersten Ressourcenadresse zu senden, wobei die zweite Anforderungsnachricht verwendet wird, um die statische SDK-Ressource auf dem CDN-Server (400) anzufordern;
wobei das Empfangsmodul (902) ferner dazu konfiguriert ist, um eine Antwortnachricht zu empfangen, die zu der zweiten Anforderungsnachricht gehört und die durch den CDN-Server (400) gesendet wird;
wobei das Sendemodul (901) ferner dazu konfiguriert ist, um: eine dritte Anforderungsnachricht an den Quellserver (500) basierend auf der zweiten Ressourcenadresse zu senden, falls die Antwortnachricht der zweiten Anforderungsnachricht Anforderungsfehlschlaginformationen umfasst, wobei die dritte Anforderungsnachricht verwendet wird, um die statische SDK-Ressource auf dem Quellserver (500) anzufordern; und
wobei das Empfangsmodul (902) ferner dazu konfiguriert ist, um eine Antwortnachricht zu empfangen, die zu der dritten Anforderungsnachricht gehört und die durch den Quellserver (500) zurückgegeben wird, wobei die Antwortnachricht der dritten Anforderungsnachricht die statische SDK-Ressource umfasst.

4. Endgerätevorrichtung (100) nach Anspruch 3, wobei die zweite Ressourcenadresse eine Standby-Adresse ist.

5. Endgerätevorrichtung (100), umfassend:
einen Speicher (1102), wobei der Speicher computerlesbare Anweisungen speichert; und
einen mit dem Speicher verbundenen Prozessor (1101), wobei, wenn die computerlesbaren Anweisungen durch den Prozessor (1101) ausgeführt werden, die Endgerätevorrichtung (100) befähigt wird, das Verfahren nach einem der Ansprüche 1 bis 2 zu implementieren.

6. Computerprogrammprodukt, umfassend computerlesbare Anweisungen, wobei, wenn die computerlesbaren Anweisungen auf einem Computer ausgeführt werden, der Computer befähigt wird, das Verfahren nach einem der Ansprüche 1 bis 2 durchzuführen.

7. Computerlesbares Speichermedium, wobei das computerlesbare Speichermedium Anweisungen speichert; und wenn die Anweisungen auf einem Computer ausgeführt werden, der Computer befähigt wird, das Verfahren nach einem der Ansprüche 1 bis 2 durchzuführen.

8. Kommunikationssystem, wobei das Kommunikationssystem eine Endgerätevorrichtung (100) nach Anspruch 5, einen Dienstserver (200) und einen Software-Development-Kit-Server (SDK-Server) (300) umfasst;
wobei
der Dienstserver (200) dazu konfiguriert ist, um eine vierte Anforderungsnachricht an den SDK-Server (300) basierend auf der ersten Anforderungsnachricht zu senden, wobei die vierte Anforderungsnachricht verwendet wird, um die statische SDK-Ressource zu erhalten;
der SDK-Server (300) dazu konfiguriert ist, um eine Antwortnachricht der vierten Anforderungsnachricht an den Dienstserver (200) basierend auf der vierten Anforderungsnachricht zurückzugeben, wobei die Antwortnachricht der vierten Anforderungsnachricht eine erste Ressourcenadresse und eine zweite Ressourcenadresse umfasst, die erste Ressourcenadresse auf die statische SDK-Ressource auf einem Content-Delivery-Network-Server (CDN-Server) (400) zeigt und die zweite Ressourcenadresse auf die statische SDK-Ressource auf einem Quellserver (500) zeigt; und
der Dienstserver (200) ferner dazu konfiguriert ist, um die erste Ressourcenadresse und die zweite Ressourcenadresse an die Endgerätevorrichtung (100) zu senden.

## Revendications

1. Procédé de tolérance sur sinistre de service, comprenant :
l'envoi (201), par un dispositif terminal (100), d'un premier message de requête à un serveur de service (200), dans lequel le premier message de requête est utilisé pour demander une ressource nécessaire à l'affichage d'une page de service, la ressource comprend une ressource statique de kit de développement logiciel, SDK, dans lequel la ressource statique SDK est mise en œuvre en tant que kit de développement logiciel JavaScript, JS-SDK, et la ressource statique SDK est utilisée pour mettre en œuvre une fonction SDK associée à la page de service ; et
l'obtention (204), par le dispositif terminal (100), d'un message de réponse qui est du premier message de requête et qui est renvoyé par le serveur de service (200), dans lequel le message de réponse du premier message de requête comprend une première adresse de ressource et une seconde adresse de ressource, la première adresse de ressource désigne la ressource statique SDK sur un serveur de réseau de distribution de contenu, CDN, et la seconde adresse de ressource désigne la ressource statique SDK sur un serveur source (500) ;
l'envoi (205), par le dispositif terminal (100), d'un deuxième message de requête au serveur CDN (400) sur la base de la première adresse de ressource, dans lequel le deuxième message de requête est utilisé pour demander la ressource statique SDK sur le serveur CDN (400) ;
la réception (206), par le dispositif terminal (100), d'un message de réponse qui est du deuxième message de requête et qui est envoyé par le serveur CDN (400) ;
si le message de réponse du deuxième message de requête comprend des informations d'échec de requête, l'envoi (207), par le dispositif terminal (100), d'un troisième message de requête au serveur source (500) sur la base de la seconde adresse de ressource, dans lequel le troisième message de requête est utilisé pour demander la ressource statique SDK sur le serveur source (500) ; et
la réception (208), par le dispositif terminal (100), d'un message de réponse qui est du troisième message de requête et qui est renvoyé par le serveur source (500), dans lequel le message de réponse du troisième message de requête comprend la ressource statique SDK.

2. Procédé selon la revendication 1, dans lequel la seconde adresse de ressource est une adresse de secours.

3. Dispositif terminal (100), comprenant :
un module d'envoi (901) configuré pour envoyer un premier message de requête à un serveur de service (200), dans lequel le premier message de requête est utilisé pour demander une ressource nécessaire à l'affichage d'une page de service, la ressource comprend une ressource statique de kit de développement logiciel, SDK, dans lequel la ressource statique SDK est mise en œuvre en tant que kit de développement logiciel JavaScript, JS-SDK, et la ressource statique SDK est utilisée pour mettre en œuvre une fonction SDK associée à la page de service ; et
un module d'obtention (902), configuré pour obtenir un message de réponse qui est du premier message de requête et qui est renvoyé par le serveur de service (200), dans lequel le message de réponse du premier message de requête comprend une première adresse de ressource et une seconde adresse de ressource, la première adresse de ressource désigne la ressource statique SDK sur un serveur de réseau de distribution de contenu, CDN, (400) et la seconde adresse de ressource désigne la ressource statique SDK sur un serveur source (500) ;
le module d'envoi (901) est en outre configuré pour envoyer un deuxième message de requête au serveur CDN (400) sur la base de la première adresse de ressource, dans lequel le deuxième message de requête est utilisé pour demander la ressource statique SDK sur le serveur CDN (400) ;
le module de réception (902) est en outre configuré pour recevoir un message de réponse qui est du deuxième message de requête et qui est envoyé par le serveur CDN (400) ;
le module d'envoi (901) est en outre configuré pour : si le message de réponse du deuxième message de requête comprend des informations d'échec de requête, l'envoi d'un troisième message de requête au serveur source (500) sur la base de la seconde adresse de ressource, dans lequel le troisième message de requête est utilisé pour demander la ressource statique SDK sur le serveur source (500) ; et
le module de réception (902) est en outre configuré pour recevoir un message de réponse qui est du troisième message de requête et qui est renvoyé par le serveur source (500), dans lequel le message de réponse du troisième message de requête comprend la ressource statique SDK.

4. Dispositif terminal (100) selon la revendication 3, dans lequel la seconde adresse de ressource est une adresse de secours.

5. Dispositif terminal (100), comprenant :
la mémoire (1102), dans lequel la mémoire stocke des instructions lisibles par ordinateur ; et
un processeur (1101) connecté à la mémoire, dans lequel lorsque les instructions lisibles par ordinateur sont exécutées par le processeur (1101), le dispositif terminal (100) est activé pour mettre en œuvre le procédé selon l'une quelconque des revendications 1 et 2.

6. Produit de programme informatique, comprenant des instructions lisibles par ordinateur, dans lequel lorsque les instructions lisibles par ordinateur sont exécutées sur un ordinateur, l'ordinateur est activé pour réaliser le procédé selon l'une quelconque des revendications 1 et 2.

7. Support de stockage lisible par ordinateur, dans lequel le support de stockage lisible par ordinateur stocke des instructions ; et lorsque les instructions sont exécutées sur un ordinateur, l'ordinateur est activé pour réaliser le procédé selon l'une quelconque des revendications 1 et 2.

8. Système de communication, dans lequel le système de communication comprend un dispositif terminal (100) selon la revendication 5, un serveur de service (200) et un serveur de kit de développement logiciel, SDK (300) ;
dans lequel
le serveur de service (200) est configuré pour envoyer un quatrième message de requête au serveur SDK (300) sur la base du premier message de requête, dans lequel le quatrième message de requête est utilisé pour obtenir la ressource statique SDK ; le serveur SDK (300) est configuré pour renvoyer un message de réponse du quatrième message de requête au serveur de service (200) sur la base du quatrième message de requête, dans lequel le message de réponse du quatrième message de requête comprend une première adresse de ressource et une seconde adresse de ressource, la première adresse de ressource désigne la ressource statique SDK sur un serveur de réseau de diffusion de contenu, CDN, (400), et la seconde adresse de ressource désigne la ressource statique SDK sur un serveur source (500) ; et
le serveur de service (200) est en outre configuré pour envoyer la première adresse de ressource et la seconde adresse de ressource au dispositif terminal (100).
